# EUROPEAN PATENT SPECIFICATION

(11) **EP 4 488 645 B1**
(45) Date of publication and mention of the grant of the patent: **18.02.2026**
(21) Application number: 23183724.6
(22) Date of filing: 05.07.2023
(51) Int. Cl.: G01M 3/22, G01M 3/04, G01N 27/12

(54) **SENSING ELEMENT AND SENSOR SYSTEM FOR MONITORING HYDROCARBON FLUID LEAKAGE**
SENSORELEMENT UND SENSORSYSTEM ZUR ÜBERWACHUNG VON KOHLENWASSERSTOFFFLÜSSIGKEITSLECKAGEN
ÉLÉMENT DE DÉTECTION ET SYSTÈME DE CAPTEUR POUR SURVEILLER UNE FUITE DE FLUIDE D'HYDROCARBURE

(43) Date of publication of application: 08.01.2025
(73) Proprietor: Henkel AG & Co. KGaA, 40589 Düsseldorf (DE); Direct-C Limited, Edmonton, Alberta T5J 4P6 (CA)
(72) Inventor: Patel, Mihirkumar, 411057 Pune (IN); Shah, Jayesh P, 411001 Pune (IN); Bahrami, Kourosh, 40547 Düsseldorf (DE); Edmondson, Stephen James, Nobel, P0G 1G0 (CA); Banica, Adrian, Edmonton, T6J 2H3 (CA); Kaushik, Parmar, 950 Ebbers Cres. NW, Edmonton (CA)
(74) Representative: Viering, Jentschura & Partner mbB Patent- und Rechtsanwälte

(56) References cited:
- WO-A1-2022/014134
- US-B2- 11 143 610

## Description

### Technical Field

The invention relates to a sensing element for monitoring hydrocarbon fluid leakage that comprises an electrically conductive composition that detects hydrocarbon leakage in oil and gas industry even at higher temperatures. The invention also pertains to a sensor system comprising at least one sensing element and a method for monitoring and/or detecting hydrocarbon using the sensing element or sensor system.

### Technological Background

In oil and gas industry a variety of hydrocarbons are produced during the process of crude oil. The crude oil and hydrocarbons are transported throughout refinery from storage tanks to processing units via large pipelines connected with flanges. Hydrocarbon leakage is one of the biggest challenges for the industry from safety, hazard, and environmental aspects as hydrocarbon leakages lead to potential fire, environmental damage, and safety problems of workers.

There have been efforts in the industry to detect and monitor the hydrocarbon leakage, for example by using a sensor. However, there are still many challenges such as the accuracy, applicability, and high temperature stability of the sensors. Monitoring and detecting the hydrocarbon leakage using digital infrastructure (sensors) could be one of the fast, cost effective and accurate processes, but there is no such sustainable solution available in the industry.

US 11143610 B2 discloses a composition comprising a polymer and conductive nanoparticles for use in a sensing element that may be applied on to a surface for sensing hydrocarbon leakage. However, the cured composition lacks flexibility and good mechanical properties due to the high load of the conductive nanoparticles and can degrade at continuous high temperature conditions.

Accordingly, there was a need for a sensor and sensor system capable of monitoring and/or detecting hydrocarbon leakage which can overcome at least some of the known disadvantages.

### Summary of the invention

The present invention provides a sensing element for monitoring and/or detecting hydrocarbon fluid leakage, wherein the sensing element comprises an electrically conductive curable composition which has a good adhesion, flexibility, mechanical properties and an excellent stability at a high temperature, for example up to 300°C. The sensing element can be part of a sensor system for detecting the presence or leakage of hydrocarbon.

In accordance with a first aspect, the invention relates to a sensing element for monitoring and/or detecting hydrocarbon fluid leakage, wherein the sensing element comprises an electrically conductive curable composition comprising:
(a) at least one polyorganosiloxane having at least one terminal group of the formula (I)

   -Si(R¹)ₖ(Y)₃₋ₖ (I),

   wherein
   each R¹ is independently selected from a hydrocarbon radical containing 1 to 20 C atoms; each Y is independently selected from a hydroxy group or a hydrolysable group; and
   k is 0, 1, or 2;
(b) at least one electrically conductive carbon nanostructure in an amount of 0.01 % to 10 % by weight based on the total weight of the composition;
(c) at least one curing catalyst; and
(d) optionally, at least one crosslinker.

According to some embodiments, the composition of the sensing element may further comprise at least one non-conductive filler.

A further aspect of the present invention is directed to a sensor system for monitoring and/or detecting hydrocarbon leakage, comprising the electrically conductive curable composition as defined herein.

In still another aspect, the present invention is directed to a method for monitoring and/or detecting hydrocarbon leakage using the sensing element or sensor system as defined herein.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In preferred embodiments, the curable composition of the present invention is a moisture curable composition.

As used herein, the singular forms "a", *"an"* and *"the"* include plural referents unless the context clearly dictates otherwise.

The term *"at least one,"* as used herein, means 1 or more, i.e., 1, 2, 3, 4, 5, 6, 7, 8, 9, or more. With reference to an ingredient, the indication refers to the type of ingredient and not to the absolute number of molecules. *"At least one polymer"* thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms *"comprising", "comprises"* and *"comprised* of" as used herein are synonymous with *"including", "includes", "containing"* or *"contains",* and are inclusive or open-ended and do not exclude additional, non-recited members, elements or method steps. If used, the phrase *"consisting of"* is closed and excludes all additional elements. Further, the phrase *"consisting essentially of* excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term *"about",* as used herein in connection with a numerical value, relates to a variance of ±20%, preferably ±10% of the respective value.

The words *"preferred", "preferably", "desirably"* and *"particularly",* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

The electrically conductive curable composition that is part of the sensing element according to the invention comprises (a) at least one polyorganosiloxane having at least one terminal group of the formula (I)

-Si(R¹)ₖ(Y)₃₋ₖ (I),

wherein
each R¹ is independently selected from a hydrocarbon radical containing 1 to 20 C atoms;
each Y is independently selected from a hydroxy group or a hydrolysable group; and
k is 0, 1, or 2.

In preferred embodiments, the polyorganosiloxane (a) is a polydiorganosiloxane, more preferably a polydiorganosiloxane having at least one alkyl group and/or at least one aryl group. The alkyl group may be selected from a C₁-C₂₀ alkyl group, preferably a C₁-C₈ alkyl group, in particular is a methyl group. The aryl group may be selected from a C₆-C₁₈ aryl group, in particular is a phenyl group. In particularly preferred embodiments, the polyorganosilxoane (a) is a polydimethylsiloxane.

The polyorganosiloxane (a) has at least one, preferably at least two, terminal group of the formula (I)

-Si(R¹)ₖ(Y)₃₋ₖ (I),

wherein
each R¹ is independently selected from a hydrocarbon radical containing 1 to 20 C atoms;
each Y is independently selected from a hydroxy group or a hydrolysable group; and
k is 0, 1, or 2.

In preferred embodiments, each R¹ is independently selected from the group consisting of an alkyl group containing 1 to 20 C atoms, an aryl group containing 6 to 20 C atoms, and an aralkyl group containing 7 to 20 C atoms, preferably selected from alkyl group containing 1 to 20 C atoms, in particular 1 to 8 C atoms. Examples of R¹ include alkyl groups, such as a methyl group and an ethyl group, cycloalkyl groups, such as a cyclohexyl group, aryl groups, such as a phenyl group, and aralkyl groups, such as a benzyl group. In particularly preferred embodiments, R¹ is selected from a methyl or ethyl group.

In preferred embodiments, each Y is independently selected from a hydroxyl group, an oxime group, an alkoxy group, an acyloxy group, or an acetoxy group.

In certain embodiments, alkoxy groups, in particular methoxy and ethoxy groups, oxime groups, and acetoxy groups are particularly preferred. In particularly preferred embodiments, Y is selected from a methoxy or ethoxy group, more preferably is a methoxy group.

The term "oxime groups" as used herein includes ketoximes and aldoximes, and refers in general to groups which contain the functional group R'₂C=N-O-, wherein the oxygen atom is bound to the silicon atom, and R' may be H or another group, preferably an alkyl group.

In particularly preferred embodiments, the formula (I) is trimethoxysilyl group or dimethoxymethyl group.

In preferred embodiments, the polyorganosiloxane (a) is dialkoxyalkyl polydiorganosiloxane, more preferably dimethoxymethyl polydiorganosiloxane, in particular dimethoxymethyl polydimethylsiloxane.

In other preferred embodiments, the formula (I) is hydroxyl group. In this case, the polyorganosiloxane (a) is preferably α,ω-dihydroxyl-terminated polydiorganosiloxanes, in particular α,ω-hydroxyl-terminated polydimethylsiloxane.

The polyorganosiloxane (a) may have a kinematic viscosity of from 5,000 to 100,000 mPas, preferably from 8,000 to 50,000 mPas (Brookfield RVT, at 25°C and 50% RH, spindle 6, 20 rpm).

Mixtures comprising polyorganosiloxanes having different viscosities may also be used.

The quantity of the polyorganosiloxane (a) in the curable composition described herein may be from 50 to 95 wt. %, preferably 65 to 95 wt. %, more preferably 80 to 95 wt. %, based on the total weight of the composition.

The sensing element according to the present invention comprises (b) at least one electrically conductive carbon nanostructure in an amount of 0.01 to 10 % by weight based on the total weight of the composition.

The term "carbon nanostructure" or "CNS" refers to a plurality of carbon nanotubes (CNTs), multiwall (also known as multi-walled) carbon nanotubes (MWCNTs) in many cases, that can exist as a polymeric structure by being interdigitated, branched, crosslinked, and/or sharing common walls with one another. Thus, CNSs can be considered to have CNTs, such as, for instance, MWCNTs, as a base monomer unit of their polymeric structure. Typically, CNSs are grown on a substrate (e.g., a fiber material) under CNS growth conditions. In such cases, at least a portion of the CNTs in the CNSs can be aligned substantially parallel to one another, much like the parallel CNT alignment seen in conventional carbon nanotube forests.

The electrically conductive carbon nanostructure can be selected from the group consisting of:
carbon nanostructures or fragments of carbon nanostructures including a plurality of multiwall carbon nanotubes that are crosslinked in a polymeric structure by being branched, interdigitated, entangled and/or sharing common walls;
fractured carbon nanotubes derived from the carbon nanostructures and branched and sharing common walls with one another;
elongated CNS strands derived from the carbon nanostructures and including CNTs that have been displaced linearly with respect to one another;
dispersed CNS comprising exfoliated fractured CNTs that do not share common walls with one another; and
combinations thereof.

In preferred embodiments, the carbon nanostructure is dispersed within the polyorganosiloxane. The electrically conductive carbon nanostructures can be dispersed within the polyorganosiloxane.

The electrically conductive curable composition of the sensing element comprises the at least one electrically conductive carbon nanostructure in an amount of from 0.01 to 10 % by weight, based on the total weight of the composition. Desired conductivity can be achieved with such a low content of the carbon nanostructure. Due to the low content of the carbon nanostructure, the composition can have a good adhesion and mechanical properties such as high flexibility suitable for use as a sensor element, e.g., in a sensor strip or film, and a proper viscosity which leads to a good processability. Moreover, due to the relatively high content of the polyorganosiloxane, the composition can have a good temperature stability in both negative and positive zone of temperature.

In certain embodiments, the electrically conductive curable composition of the sensing element may further comprise at least one additional electrically conductive filler, which is different from the carbon nanostructure (b), preferably selected from the group consisting of silver, carbon black, graphite, graphene, copper, silver-coated nickel, silver-coated copper, silver-coated graphite, silver-coated polymers, silver-coated aluminium, silver-coated glass, silver-coated carbon, silver-coated boron nitride, silver-coated aluminium oxide, silver-coated aluminium hydroxide, nickel-coated graphite, and, mixtures thereof, more preferably selected from carbon black, graphite, or graphene. The composition may comprise the at least one additional electrically conductive filler up to 9 wt.%, preferably from 0.1 to 7 wt.%, more preferably 0.1 to 3 wt.%.

Preferably, the sum of the electrically conductive carbon nanostructure (b) and the additional electrically conductive filler is less than 10 wt.%, preferably less than 9 wt.%, more preferably less than 5 wt.%, in particular less than 4 wt.%. By blending the electrically conductive carbon nanostructure and the additional electrically conductive filler within these ranges, more robust system with a denser conductive network within the crosslinked silicone matrix can be achieved.

The electrically conductive curable composition part of the sensing element according to the present invention further comprises at least one curing catalyst (c).

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, dioctyltin dineodecanoate, dimethyltin dineodecanoate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate, di-n-octyltin dilaurate, dioctyltin dineodecanoate, dimethyltin dineodecanoate and mixtures thereof.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti (OR^{z})₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms. Further, titanium chelate complexes can be used.

Aluminum catalysts can also be used as curing catalysts, e.g., aluminum alkoxides

Al(OR^{z})₃,

where R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}. Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium. Diisopropoxyzirconium bis(ethyl acetoacetate), triisopropoxyzirconium (ethyl acetoacetate), and isopropoxyzirconium tris(ethyl acetoacetate) are used with very particular preference. Further, zirconium acylates can be used, for example. Halogenated zirconium catalysts can also be used. Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

In important embodiments, the curing catalyst is selected from tin compounds, preferably organotin compounds, more preferably selected from the group consisting of 1,3-dicarbonyl compounds of bivalent or tetravalent tin, dialyltin(IV) dicarboxylates, dialkyltin(IV) dialkoxylates, dialkyltin(IV) oxides, tin(II) carboxylates, and mixtures thereof.

In preferred embodiments, the quantity of the curing catalyst in the curable composition part of the sensing element described herein is from 0.01 to 5 % wt.%, more preferably 0.01 to 2 wt.%, in particular 0.01 to 1 wt.%, based on the total weight of the composition. If a mixture of different catalysts is used, the amounts refer to the total amount in the composition.

The electrically conductive curable composition part of the sensing element according to the present invention may further comprise at least one crosslinker (d).

In preferred embodiments, the crosslinker (d) is selected from a silane compound, preferably having the general formula Si(R²)ₘ(X)₄₋ₘ, wherein each R² is independently selected from an aliphatic or aromatic hydrocarbon group containing 1 to 20 C atoms, a vinyl group or a hydrogen atom; each X is independently selected from a hydroxyl group or a hydrolysable group; m is 0, 1, 2, or 3, preferably 1.

In preferred embodiments, each R² in the general formula is independently selected from an aliphatic hydrocarbon group containing 1 to 20 C atoms, more preferably from a C₁-C₁₂ alkyl, alkenyl, or alkynyl group, in particular preferably C₁-C₈ alkyl group, most preferably a methyl group.

In preferred embodiments, X is selected from a hydrolysable group, more preferably an oxime group, an alkoxy group, an acyloxy group, or an acetoxy group.

In preferred embodiments, the polyorganosiloxane (a) has at least one alkoxysilane terminal group, preferably methyldimethoxysilane terminal group, and the crosslinker (e) is a silane compound having at least one hydrolysable group X selected from an alkoxy group, preferably methoxy or ethoxy group, more preferably methoxy group. In particular, the combination of polydimethylsiloxane (a) having at least two alkoxysilane terminal groups, preferably methyldimethoxysilane terminal groups and alkylalkoxysilane, preferably methyltrimethoxysilane (component (e)), is preferred.

In preferred embodiments, the polyorganosiloxane (a) is a hydroxyl-terminated polyorganosiloxane, preferably α,ω-dihydroxyl-terminated polydiorganosiloxane, more preferably α,ω-hydroxyl-terminated polydimethylsiloxane, and the crosslinker (e) is a silane compound having at least one hydrolysable group X selected from an alkoxy group, an oxime group, an acyloxy group, or an acetoxy group.

In preferred embodiments, the quantity of the crosslinker in the curable composition described herein is from 0.1 to 10 % wt.%, more preferably 0.5 to 5 wt.%, based on the total weight of the composition.

The electrically conductive curable composition part of the sensing element according to the present invention may further comprise at least one adhesion promoter.

Suitable as adhesion promoters are, silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis- (2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In preferred embodiments, the at least one adhesion promoter is selected from aminosilanes, preferably is selected from the group consisting of 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3- aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)- propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamin, 4-amino-3,3-dimethylbutyltrimethoxy silane and 4-amino-3,3-dimetylbuthyltriethoxy silane, and mixtures thereof, particularly preferably of 3- aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,Ndimethylamino)propyltriethoxysilane, (N,N-dimethylamino)methyltrimethoxysilane, (N,Ndimethylamino)methyltriethoxysilane, 3-(N,N-diethylamino)propyltrimethoxysilane, 3-(N,Ndiethylamino)propyltriethoxysilane, (N,N-diethylamino)methyltrimethoxysilane, (N,Ndiethylamino)methyltriethoxysilane, bis(3-trimethoxysilyl)propylamine, bis(3-triethoxysilyl)propylamine, 4-amino-3,3-dimethylbutyltrimethoxy silane and 4-amino-3,3-dimetylbuthyltriethoxy silane.

In preferred embodiments, the quantity of the adhesion promoter in the curable composition described herein is from 0.1 to 5 wt.%, more preferably from 0.2 to 2 wt.%, in particular from 0.5 to 2 wt.%, based on the total weight of the composition.

In preferred embodiments, the electrically conductive curable composition part of the sensing system comprises
i) at least one polyorganosiloxane (a) in an amount of from 50 to 95 % by weight, preferably 65 to 95 % by weight, more preferably 80 to 95 % by weight, based on to the total weight of the composition; and/or
ii) at least one electrically conductive carbon nanostructure (b) in an amount of from 0.01 to 10 % by weight, based on to the total weight of the composition; and/or
iii) at least one curing catalyst (c) in an amount of from 0.01 to 5 % by weight, preferably 0.01 to 2 % by weight, more preferably 0.01 to 1 % by weight, based on to the total weight of the composition; and/or
iv) at least one crosslinker (d) in an amount of from 0.1 to 10 % by weight, more preferably 0.5 to 5 % by weight, based on the total weight of the composition; and/or
v) at least one adhesion promoter in an amount of from 0.1 to 5 % by weight, preferably 0.1 to 5 % by weight, more preferably 0.2 to 2 % by weight, based on to the total weight of the composition.

The electrically conductive curable composition part of the sensing element may comprise at least one non-conductive filler (e) in an amount of from 2 to 20 % by weight, preferably 6 to 20 % by weight, more preferably 7 to 15 % by weight, based on to the total weight of the composition.

The electrically conductive curable composition part of the sensing element according to the present invention may further comprise at least one absorbing material different from the component (c) non-conductive filler.

The electrically conductive curable composition part of the sensing element according to the present invention may further comprise any one or more additional ingredients selected from the group consisting of plasticizers, stabilizers, antioxidants, fillers, moisture scavengers, blocking agents, reactive diluents, drying agents, UV stabilizers, rheological aids, and solvents.

The electrically conductive curable composition part of the sensing element can be a one-component or two-component composition, preferably a one-component composition.

The electrically conductive curable composition part of the sensing element according to the invention can be obtained by mixing the above-described components, preferably by dispersing the carbon nanostructure and non-conductive filler such as metal oxide within the polyorganosiloxane. This can take place in suitable dispersing units, e.g., a high-speed mixer, Three Roll Mill, High speed disperser etc. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

When manufacturing the sensing element, it is possible to cure the electrically conductive curable composition upon exposure to moisture. Upon curing, the composition possesses the properties of the silicone adhesive and/or sealant including good thermal resistance and flexibility along with electrical conductivity, and thus can be used as a conductive composition, such as conducive sealant/adhesive or ink in a sensor for monitoring and/or detecting the hydrocarbon leakage. The cured product exhibits a good adhesion and mechanical properties and excellent thermal resistance/stability at high temperature.

In the sensing element, the composition conducts electricity, and upon contact with hydrocarbons, it absorbs the hydrocarbons and swells, which changes its electrical resistance values in the sensing element. The change in electrical resistance is measured as a signal, indicating the leakage of hydrocarbon.

The invention also pertains to a sensor system for monitoring and/or detecting hydrocarbon fluid leakage comprising at least one sensing element as described above, wherein each sensing element is connected to a positive electrode and a passive electrode, the passive electrode being connected to ground;
wherein the sensor system further comprises a data acquisition device in communication with the positive electrode of each sensing element.

Such a sensor system enables a more accurate detection of a fluid hydrocarbon leak and can increase the total area across which hydrocarbon leaks can be detected.

According to an embodiment, the electrically conductive cured composition in the sensing elements forms a layer and the sensing elements form a sensor array comprising at least one sensing element arranged to monitor and/or detect hydrocarbon fluid leakage across a longitudinal direction of the composition and at least one sensing element arranged to monitor and/or detect hydrocarbon fluid leakage across a transversal direction of the composition.

Such an array of sensing elements allows a better localization of the leak in two dimensions and can further enable an identification of a depth of the leak which is an indication of the radial extent of the leak. Such knowledge enables a better repair action to be planned.

According to an embodiment, the sensing elements are sensitive to different types of leaking hydrocarbon fluids.

According to an embodiment, the sensor system further comprises a substrate and the at least one sensing element is disposed on the substrate, the substrate being configured to be installed on at least a portion of a hydrocarbon transportation structure or hydrocarbon storage structure.

According to an embodiment, each sensing element is configured to comprise a distinctive current limiting resistance to provide a unique representative voltage to each sensing element.

According to an embodiment, the electrodes comprise one or more of: silver, copper, gold, and platinum.

According to an embodiment, the one or more sensing element is apply-able directly on to at least a portion of the transportation or storage structure.

According to an embodiment, the substrate comprises one or more of: polyimide, polycarbonate (PC), and fluorene polyester polyimide, PEEK, PTFE.

According to an embodiment, the current limiting resistance is varied across each sensing element to provide a unique representative voltage to each sensing element.

According to an embodiment, an analog electrode tagging process is used to locate at least one of the electrodes in the sensor network.

According to an embodiment, the data acquisition system comprises a multiplexer microswitch which switches between electrodes of different sensing elements.

More particularly, the multiplexer microswitch is controlled by a microcontroller clock establishing a frequency for the switching from one electrode to another.

According to an embodiment, the sensor system further comprises a de-multiplexer system for demultiplexing signals output by the multiplexer microswitch, and the de-multiplexed signals are processed using an ANFIS algorithm.

According to an embodiment, the system is calibrated to take into account temperature effects on the sensor network.

The method for monitoring and/or detecting hydrocarbon leakage according to the invention uses the sensing element as defined herein.

### Brief description of the figures

The present disclosure will hereinafter be described in conjunction with the following figures, wherein like numerals denote like elements, and:
Fig. 1a and 1b are schematic representations of a sensing element with electrode connectors according to exemplary embodiments;
Fig. 2 is a schematic representation of a sensor system according to an exemplary embodiment;

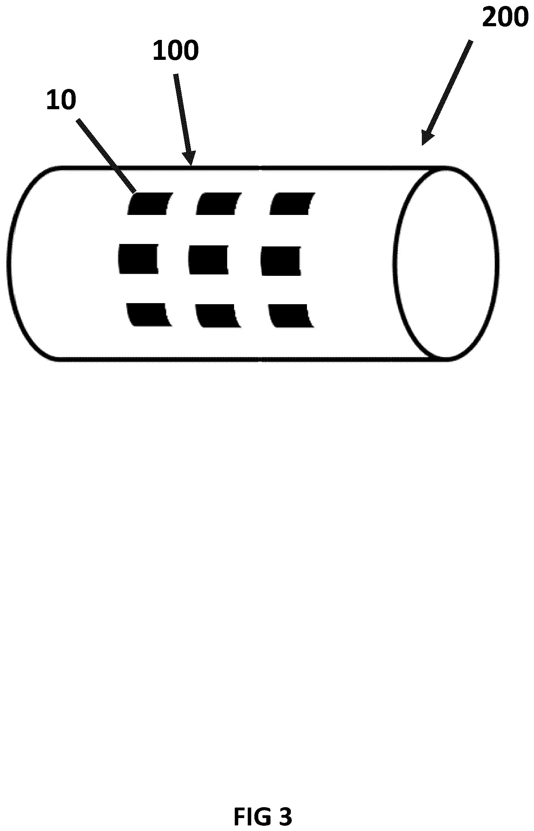

Fig. 3 is a schematic representation of a sensor system applied onto a substrate to detect or monitor a hydrocarbon fluid leak.

### Detailed description

The invention provides a sensing element sensitive to fluid hydrocarbons that is used in a sensor or in an array of sensors forming a sensor system, and a method for detecting or monitoring hydrocarbon fluid leakage.

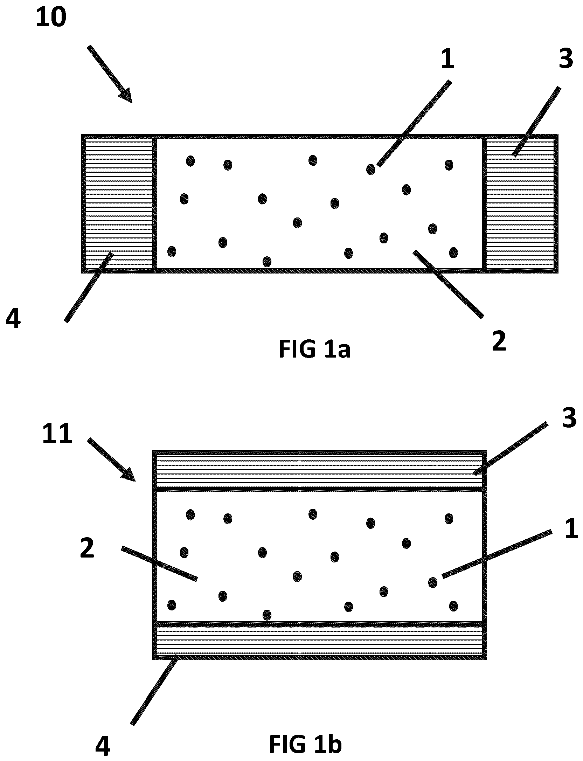

Figures 1a and 1b provide two schematic illustrations of a sensing element 10, 11 according to the invention. The sensing element 10, 11 of these figures comprise an electrically conductive cured composition made up of a mix of at least one electrically conductive carbon nanostructure 1 (b) in an amount of 0.01 to 10 % by weight based on the total weight of the composition and a non-conductive composition 2 comprising:
(a) at least one polyorganosiloxane having at least one terminal group of the formula (I)

   -Si(R¹)ₖ(Y)₃₋ₖ (I),

   wherein
   each R¹ is independently selected from a hydrocarbon radical containing 1 to 20 C atoms;
   each Y is independently selected from a hydroxy group or a hydrolysable group; and
   k is 0, 1, or 2;
(c) at least one curing catalyst; and
(d) optionally, at least one crosslinker.

The composition that is part of the sensing element may further comprise at least one non-conductive filler.

It is to be noted that the electrically conductive carbon nanostructure 1 represents a small portion of the total electrically conductive cured composition. A principle on which the sensing element works consists in measuring a certain electrical resistance across the sensing element 10, 11 when the sensing element 10, 11 is not exposed to a fluid hydrocarbon, and to detect a change in the measured resistance across the sensing element 10, 11 when the sensing element 10, 11 has been in contact with a fluid hydrocarbon.

The change of measured resistance can be determined with electrodes in contact with the sensing element 10, 11 as illustrated on figures 1a and 1b. A passive electrode 3 is advantageously connected to the ground and a positive electrode 4 enables a voltage measurement across the sensing element 10, 11. A determination of the resistance of the sensing element 10, 11 is enabled with these measurements.

As seen on figure 1a, the positive electrode 4 and the passive electrode 3 may be arranged so that the resistance is measured across a longitudinal direction of the sensing element 10.

Alternatively, the positive electrode 4 and the passive electrode 3 can be arranged so that the resistance is measured across a transversal direction of the sensing element 11.

Sensitivity of the sensing element 10, 11 to different types of fluid hydrocarbons can be adapted for example by a proper selection of the non-conductive composition 2.

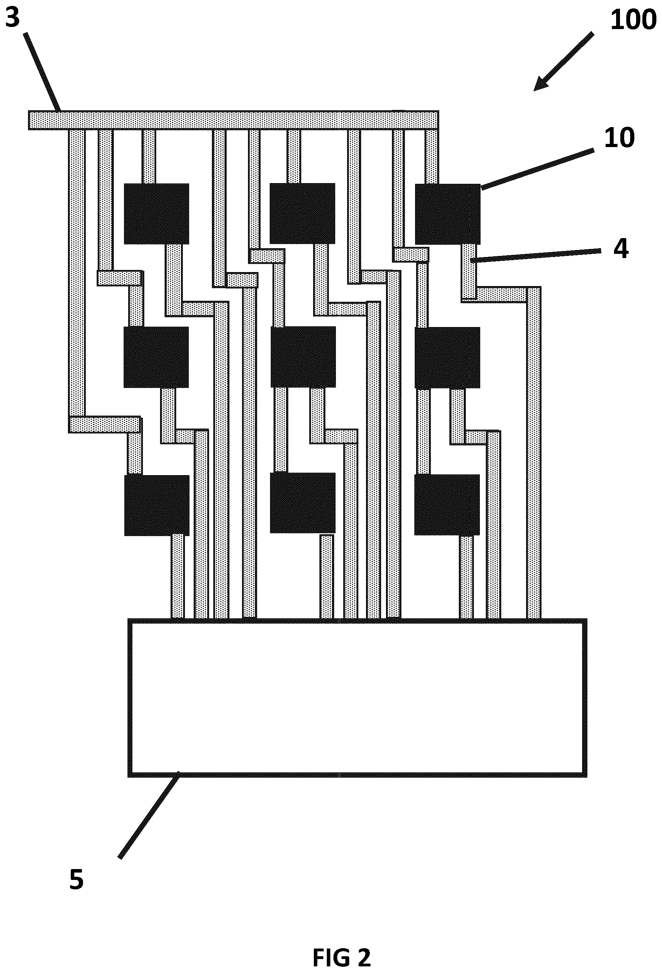

Figure 2 provides a schematic representation of a sensor system 100 comprising a plurality of sensing elements 10 each connected to a passive electrode 3 and a positive electrode 4. All sensing elements 10 of the sensor system 100 are connected to a data acquisition device 5 in communication with the positive electrode 4 of each sensing element 10, 11.

The use of an array enables a better determination of the location of a hydrocarbon fluid leak, in order to allow a user to take preventive measures to repair the leak.

The electrical setup of the sensor system 100 is designed to allow an identification of the location of the sensing element 10, 11 that is exposed to a hydrocarbon leak. This identification is possible at the data acquisition unit 5 based on the location of the electrode that delivers a signal showing a change in electrical resistance.

The design of the sensing elements 10, 11 in the sensor system 100 may be built so that each sensing element has a specific current limiting resistance that makes it easier to identify which sensing element 10, 11 at which location was subject to a change of resistance. In practice, such a difference can be designed by changing the percentage of conductive carbon nanostructures 1 in the sensing element 10, 11 or by selecting a different non-conductive composition 2 encompassing these conductive carbon nanostructures 1.

The arrangement of different types of sensing elements 10, 11 in the sensor system 100 can also contribute to acquiring a more complete information regarding any fluid hydrocarbon leaks. For example, the electrodes of the sensor system can be arranged on the sides of the sensing elements 10, 11. It is also possible to arrange the electrodes on the upper and lower portion of the sensing elements 10, 11 to provide some information regarding the depth of penetration of the fluid hydrocarbon leak. It is also possible to stack sensing elements 10, 11 in multiple layers to achieve such an effect.

In preferred embodiments, the sensing element can be casted on a film, for example a polyamide, PBT, PEEK (polyetheretherketone) film having ENIG Cu, Cu/Cu-Be or any conductive metal-based leads at each end to prepare a sensor strip which is connected with a data acquisition system in a wired or wireless way. When the sensing element contacts with hydrocarbons, the conductivity of the electrical resistance of the composition changes and the change in electrical resistance value acts as an electronic signal to detect the presence of hydrocarbons or leakage of hydrocarbons.

The electrical resistance values up to 10 MΩ (Mega Ohms) are preferable for the sensor for hydrocarbon leakage detection. The electrical resistance values in KΩ (Kilo Ohms) range are particularly preferred for the hydrocarbon leakage detection as the % change in electrical resistance in KΩ could be measured quickly and the accordingly the alarm triggering system could be designed. Additionally, prolonged high temperature exposure during application causes resin to shrink and the resistance to drop. Thus, the sensor with KΩ resistance range may be better for sensitivity and detection range throughout its working life. In addition, the electrical resistance values in KΩ will avoid the noise in the electrical resistance values and avoid false alarm triggering. But technically the electrical resistance values in MΩ (Mega Ohms) could also act as sensors, as they may take more time to indicate the % change in resistance values compared to the electrical resistance values in KΩ (Kilo Ohms).

The sensors disclosed in this document may be sampled repeatedly over time to obtain a response graph. The shape of the response graph, especially the initial response in the first 10 seconds, is different for different chemicals. This enables the sensor system to differentiate between different species of leaking hydrocarbon fluids.

As disclosed in US 11143610, each sensing element may have a resistor in series with the element as a current limiting resistance. In an example, each current limiting resistance is different so that each sensing element has a unique representative voltage. A data acquisition system may switch repeatedly between different sensing elements, sequentially interrogating along a chain of sensors so each reading corresponds to a different sensor location. This switching may use for example a microcontroller clock controlling a multiplexer microswitch. The different sensing elements may be located by the different voltage (analog tagging). In an example, there are 50 sensors switched between in this way, though more or fewer may be used. The multiplexed signals may later be de-multiplexed, and the de-multiplexed signals may be processed for example using an ANFIS algorithm as disclosed in US11143610.

The following examples serve to explain the invention, but the invention is not limited thereto.

### Examples

The curable compositions presented in Tables 1 and 2 were prepared. The control example C1 was without any conductive material, while the other compositions comprise various amounts of conductive CNS and/or carbon black dispersed within the PDMS matrix. The compositions were moisture-cured at room temperature. The tack free time, mechanical properties, and viscosity of the cured composition were measured as described below.

Tack-free Time: This was determined by applying the product at a wet layer thickness of 75 µm at 23°C and a relative humidity of 50%. The coating was considered tack free when fingerprints could no longer be observed after touching the surface with a clean and dry finger. The tack-free time was measured using a timing device.

Viscosity: Viscosity of the compositions were measured by Brookfield CAP 2000 viscometer, at 25°C and 50% RH, spindle 5, 20 rpm.

The electrically conductive curable compositions were casted on polyamide film (12cm x 1cm) with Cu/ Cu-Be leads at each end to prepare a sensor strip. Dry films with 200-250-micron thickness with 10cm x 1cm dimensions were obtained. The compositions were allowed to cure at room temperature for 24 hours followed by 2 hours at 220°C (or 7 days at ambient conditions). The cured sensor strip was then connected with the Keysight DAQ970A-Data acquisition system (Electrical resistance meter) to measure the electrical resistance values in Ω/ KΩ/ MΩ. The sensors were aged at elevated temperatures (up to 300 °C) and then their electrical resistance values were measured. Upon heat the compositions shrink and the CNS particles come close to each other and hence it increases the conductivity, resulting reduction in electrical resistance values over a period of time.

Hydrocarbon response for xylene and n-octane was tested by measuring the time required for 2x (Double) resistance at room temperature. The measured time refers to the time required for detect hydrocarbon leakage.

**Table 1**

| **Composition** (wt.%) | C1 | E1 | C2 | E2 | E3 | C3 | C4 | C5 |
|---|---|---|---|---|---|---|---|---|
| dimethoxymethyl-terminated PDMS (viscosity:45000mPas) | 88.93 | 88.73 | 96.19 | 93.69 | 88.69 | 83.8 | 73.03 | 70.5 |
| CNS | | 0.2 | 0.24 | 0.24 | 0.24 | | | |
| Carbon Balck | | | | | | 5 | 10.77 | 13.3 |
| D4 (organic solvent) | | | | | | | 5 | 5 |
| Methyl trimethoxysilane | 3 | 3 | 3 | 3 | 3 | 3 | 3 | 3 |
| Aminopropyl trimethoxysilane | 0.5 | 0.5 | 0.5 | 0.5 | 0.5 | 0.5 | 0.5 | 0.5 |
| dioctyltin dineodecanoate | 0.07 | 0.07 | 0.07 | 0.07 | 0.07 | 0.2 | 0.2 | 0.2 |
| | | | | | | | | |
| Tack Free Time (min) | < 40 | < 40 | < 40 | < 40 | < 40 | < 90 | <90 | <90 |
| Viscosity (mPas) | 45000-50000 | 50000-55000 | 50000-60000 | 50000-60000 | 50000-60000 | 70000 90000 | 90000-110000 | 100000 125000 |
| Electrical Resistance | *Overload | < 3 MΩ | < 200 KΩ | < 200 KΩ | < 200 KΩ | < 50 MΩ | < 15 MΩ | < 250 KΩ |

| Time (mins) required for 2x resistance | | | | | | | | |
|---|---|---|---|---|---|---|---|---|
| Xylene | n/a | 3 | >10 | >6 | <4 | 3 | 3 | 2 |
| n-Octane | n/a | 2 | >8 | >4 | 2 | 2 | 2 | 2 |

**Table 2**

| **Composition** (wt.%) | | C6 | E4 | C7 | E5 |
|---|---|---|---|---|---|
| dimethoxymethyl-terminated PDMS (viscosity: 45000 mPas) | | 95.73 | 88.23 | 95.23 | 87.74 |
| CNS | | 0.2 | 0.2 | 0.2 | 0.2 |
| Carbon Balck | | 0.5 | 0.5 | 1 | 1 |
| Methyl trimethoxysilane | | 3 | 3 | 3 | 3 |
| Aminopropyl trimethoxysilane | | 0.5 | 0.5 | 0.5 | 0.5 |
| dioctyltin dineodecanoate | | 0.07 | 0.07 | 0.07 | 0.07 |
| | | | | | |
| Tack Free Time (min) | | < 40 | < 40 | < 40 | < 40 |
| Viscosity (mPas) | | 50000-55000 | 50000-55000 | 50000-60000 | 50000-60000 |
| Electrical Resistance | | < 250 KΩ | < 250 KΩ | < 250 KΩ | < 200KΩ |

| | Time (mins) required for 2x resistance | | | | |
|---|---|---|---|---|---|
| Xylene | | 11 | 3 | 10 | 3 |
| n-Octane | | 8 | 2 | 9 | <3 |

Table 2 shows that the blend of CNS and carbon black makes the formulation more robust and easier to process. In addition, the sensor detected the presence of the hydrocarbons very early and generated signals in the form of rapid increase in electrical resistance value of sensor.

The electrically conductive compositions comprising carbon black required relatively higher amount of the carbon black than the amount of the CNS to obtain electrical resistance values suitable for the sensor for the hydrocarbon leakage detection. However, high amount of carbon black increases the viscosity of the composition abruptly and it makes it very much difficult to process the formulation, hence some organic solvent or dispersing media has to be used to manage the formulation viscosity, dispersion and for ease of applications.

The compositions comprising the blend of CNS and conductive carbon black in low amounts have lower electrical resistance values in kΩ range.

In addition, the sensor detected the presence of the hydrocarbons very early and generated signals in the form of rapid increase in electrical resistance value of sensor.

## Claims

1. A sensing element (10, 11) for monitoring and/or detecting hydrocarbon fluid leakage, the sensing element comprising an electrically conductive cured composition comprising
(a) at least one polyorganosiloxane having at least one terminal group of the formula (I)
-Si(R¹)ₖ(Y)₃₋ₖ (I),
wherein
each R¹ is independently selected from a hydrocarbon radical containing 1 to 20 C atoms;
each Y is independently selected from a hydroxy group or a hydrolysable group; and
k is 0, 1, or 2;
(b) at least one electrically conductive carbon nanostructure (1) in an amount of 0.01 to 10 % by weight based on the total weight of the composition;
(c) at least one curing catalyst; and
(d) optionally, at least one crosslinker.

2. The sensing element (10, 11) according to claim 1, wherein the at least one polyorganosiloxane (a) is a polydiorganosiloxane, preferably polydimethylsiloxane and/or the polyorganosiloxane has at least two terminal groups of the formula (I).

3. The sensing element (10, 11) according to any one of claims 1 or 2, wherein
each R¹ is independently selected from the group consisting of an alkyl group containing 1 to 20 C atoms, an aryl group containing 6 to 20 C atoms, and an aralkyl group containing 7 to 20 C atoms, preferably selected from alkyl group containing 1 to 20 C atoms, more preferably 1 to 8 C atoms; and/or
each Y is independently selected from a hydrolysable group, an oxime group, an alkoxy group, an acyloxy group, or an acetoxy group, preferably an alkoxy groups.

4. The sensing element (10, 11) according to any one of claims 1 to 3, wherein the electrically conductive carbon nanostructure (b) is selected from the group consisting of:
carbon nanostructures or fragments of carbon nanostructures including a plurality of multiwall carbon nanotubes that are crosslinked in a polymeric structure by being branched, interdigitated, entangled and/or sharing common walls;
fractured carbon nanotubes derived from the carbon nanostructures and branched and sharing common walls with one another;
elongated CNS strands derived from the carbon nanostructures and including CNTs that have been displaced linearly with respect to one another;
dispersed CNS comprising exfoliated fractured CNTs that do not share common walls with one another; and
combinations thereof.

5. The sensing element (10, 11) according to any one of claims 1 to 4, wherein the composition comprises the electrically conductive carbon nanostructure (b) in an amount of 0.05 to 1 % by weight, preferably 0.05 to 0.5 % by weight, based on the total weight of the composition.

6. The sensing element (10, 11) according to any one of claims 1 to 6, the composition further comprises at least one additional electrically conductive filler, which is different from the carbon nanostructure (b), up to 9 wt.%, preferably from 0.1 to 7 wt.%, more preferably from 0.1 to 3 wt.%, based on the total weight of the composition, provided that the sum of the electrically conductive carbon nanostructure (b) and the additional electrically conductive filler is less than 10 wt.%, preferably less than 9 wt.%, more preferably less than 5 wt.%, in particular less than 4 wt.%.

7. The sensing element (10, 11) according to any one of claims 1 to 6, wherein the crosslinker (e) is selected from a silane compound having the general formula Si(R²)ₘ(X)₄₋ₘ, wherein
each R² is independently selected from an aliphatic or aromatic hydrocarbon group containing 1 to 20 C atoms, a vinyl group or a hydrogen atom;
each X is independently selected from a hydroxyl group or a hydrolysable group, preferably selected from an oxime group, an alkoxy group, an acyloxy group, or an acetoxy group; and m is 0, 1, 2, or 3, preferably 1.

8. The sensing element (10, 11) according to any one of claims 1 to 7,
wherein:
the polyorganosiloxane (a) has at least one alkoxysilane terminal group, preferably methyldimethoxysilane terminal group, and the crosslinker (e) is a silane compound having at least one hydrolysable group X selected from an alkoxy group, preferably methoxy or ethoxy group, more preferably methoxy group; or the polyorganosiloxane (a) is a hydroxyl-terminated polyorganosiloxane, preferably α,ω-dihydroxyl-terminated polydiorganosiloxane, more preferably α,ω-hydroxyl-terminated polydimethylsiloxane, and the crosslinker (e) is a silane compound having at least one hydrolysable group X selected from an alkoxy group, an oxime group, an acyloxy group, or an acetoxy group.

9. A sensor system (100) for monitoring and/or detecting hydrocarbon fluid leakage comprising at least one sensing element (10, 11) according to any one of claims 1 to 8, wherein each sensing element is connected to a positive electrode (4) and a passive electrode 83), the passive electrode (3) being connected to ground;
wherein the sensor system (100) further comprises a data acquisition device (5) in communication with the positive electrode (4) of each sensing element (10, 11).

10. The sensor system (100) of claim 10, wherein the electrically conductive cured composition in the sensing elements (10, 11) forms a layer and wherein the sensing elements (10, 11) form a sensor array comprising at least one sensing element (10) arranged to monitor and/or detect hydrocarbon fluid leakage across a longitudinal direction of the composition and at least one sensing element (11) arranged to monitor and/or detect hydrocarbon fluid leakage across a transversal direction of the electrically conductive cured composition.

11. The sensor system (100) according to any one of claims 9 or 10, comprising sensing elements (10, 11) sensitive to different types of leaking hydrocarbon fluids.

12. The sensor system (100) according to any one of claims 9 to 11, further comprising a substrate and wherein the at least one sensing element (10, 11) is disposed on the substrate, the substrate being configured to be installed on at least a portion of a hydrocarbon transportation structure or hydrocarbon storage structure.

13. The sensor system (100) according to any one of claims 9 to 12, wherein each sensing element (10, 11) is configured to comprise a distinctive current limiting resistance to provide a unique representative voltage to each sensing element (10, 11).

14. A method for monitoring and/or detecting hydrocarbon leakage using the sensing element (10, 11) according to any one of claims 1 to 8.

## Patentansprüche

1. Sensorelement (10, 11) zum Überwachen und/oder Erkennen von Kohlenwasserstofffluidleckagen, das Sensorelement umfassend eine elektrisch leitfähige gehärtete Zusammensetzung, umfassend
(a) mindestens ein Polyorganosiloxan, das mindestens eine endständige Gruppe der Formel (I) aufweist:
-Si(R¹)ₖ(Y)₃₋ₖ (I),
wobei
jedes R¹ aus einem Kohlenwasserstoffrest unabhängig ausgewählt ist, der 1 bis 20 C-Atome aufweist;
jedes Y aus einer Hydroxylgruppe oder einer hydrolysierbaren Gruppe unabhängig ausgewählt ist; und
k 0, 1 oder 2 ist;
(b) mindestens eine elektrisch leitfähige Kohlenstoffnanostruktur (1) in einer Menge von 0,01 bis 10 Gew.-%, bezogen auf das Gesamtgewicht der Zusammensetzung;
(c) mindestens einen Härtungskatalysator; und
(d) optional mindestens einen Vernetzer.

2. Sensorelement (10, 11) nach Anspruch 1, wobei das mindestens eine Polyorganosiloxan (a) ein Polydiorganosiloxan, vorzugsweise Polydimethylsiloxan ist und/oder das Polyorganosiloxan mindestens zwei endständige Gruppen der Formel (I) aufweist.

3. Sensorelement (10, 11) nach einem der Ansprüche 1 oder 2,
wobei
jedes R¹ unabhängig voneinander aus der Gruppe ausgewählt ist, bestehend aus einer Alkylgruppe, die 1 bis 20 C-Atome enthält, einer Arylgruppe, die 6 bis 20 C-Atome enthält, und einer Aralkylgruppe, die 7 bis 20 C-Atome enthält, vorzugsweise aus einer Alkylgruppe ausgewählt ist, die 1 bis 20 C-Atome enthält, stärker bevorzugt 1 bis 8 C-Atome; und/oder
jedes Y aus einer hydrolysierbaren Gruppe, einer Oximgruppe, einer Alkoxygruppe, einer Acyloxygruppe oder einer Acetoxygruppe unabhängig ausgewählt ist, vorzugsweise einer Alkoxygruppe.

4. Sensorelement (10, 11) nach einem der Ansprüche 1 bis 3, wobei die elektrisch leitfähige Kohlenstoffnanostruktur (b) aus der Gruppe ausgewählt ist, bestehend aus:
Kohlenstoffnanostrukturen oder Fragmenten von Kohlenstoffnanostrukturen, einschließlich einer Vielzahl mehrwandiger Kohlenstoffnanoröhren, die in einer Polymerstruktur vernetzt sind, indem sie verzweigt, verflochten, verschlungen sind und/oder gemeinsame Wände aufweisen;
gebrochenen Kohlenstoffnanoröhren, die aus den Kohlenstoffnanostrukturen stammen, verzweigt sind und gemeinsame Wände aufweisen;
länglichen CNS-Strängen, die aus den Kohlenstoffnanostrukturen stammen und CNTs einschließen, die linear zueinander verschoben wurden;
einer dispergierten CNS, umfassend exfolierte, gebrochene CNTs, die keine gemeinsamen Wände miteinander aufweisen; und
Kombinationen davon.

5. Sensorelement (10, 11) nach einem der Ansprüche 1 bis 4, wobei die Zusammensetzung die elektrisch leitfähige Kohlenstoffnanostruktur (b) in einer Menge von 0,05 bis 1 Gew.-%, vorzugsweise 0,05 bis 0,5 Gew.-%, bezogen auf das Gesamtgewicht der Zusammensetzung, umfasst.

6. Sensorelement (10, 11) nach einem der Ansprüche 1 bis 6, wobei die Zusammensetzung ferner mindestens einen weiteren elektrisch leitfähigen Füllstoff umfasst, der sich von der Kohlenstoffnanostruktur (b) unterscheidet, bis zu 9 Gew.-%, vorzugsweise 0,1 bis 7 Gew.-%, besonders bevorzugt 0,1 bis 3 Gew.-%, bezogen auf das Gesamtgewicht der Zusammensetzung, vorausgesetzt, dass die Summe aus der elektrisch leitfähigen Kohlenstoffnanostruktur (b) und dem weiteren elektrisch leitfähigen Füllstoff weniger als 10 Gew.-%, vorzugsweise weniger als 9 Gew.-%, besonders bevorzugt weniger als 5 Gew.-%, insbesondere weniger als 4 Gew.-% beträgt.

7. Sensorelement (10, 11) nach einem der Ansprüche 1 bis 6, wobei der Vernetzer (e) aus einer Silanverbindung ausgewählt ist, die die allgemeine Formel Si(R²)ₘ(X)₄₋ₘ aufweist, wobei
jedes R² aus einer aliphatischen oder aromatischen Kohlenwasserstoffgruppe, die 1 bis 20 C-Atome enthält, einer Vinylgruppe oder einem Wasserstoffatom unabhängig ausgewählt ist;
jedes Y aus einer Hydroxylgruppe oder einer hydrolysierbaren Gruppe ausgewählt ist, vorzugsweise aus einer Oximgruppe, einer Alkoxygruppe, einer Acyloxygruppe oder einer Acetoxygruppe ausgewählt ist; und
m 0, 1, 2 oder 3 ist, vorzugsweise 1.

8. Sensorelement (10, 11) nach einem der Ansprüche 1 bis 7,
wobei:
das Polyorganosiloxan (a) mindestens eine endständige Alkoxysilangruppe, vorzugsweise eine endständige Methyldimethyloxysilangruppe aufweist, und der Vernetzer (e) eine Silanverbindung ist, die mindestens eine hydrolysierbare Gruppe X aufweist, die aus einer Alkoxygruppe, vorzugsweise einer Methoxy- oder Ethoxygruppe, stärker bevorzugt einer Methoxygruppe ausgewählt ist; oder
das Polyorganosiloxan (a) ein hydroxylterminiertes Polyorganosiloxan, vorzugsweise ein α,ω-dihydroxylterminiertes Polydiorganosiloxan, besonders bevorzugt ein α,ω-hydroxylterminiertes Polydimethylsiloxan ist, und der Vernetzer (e) eine Silanverbindung ist, die mindestens eine hydrolysierbare Gruppe X aufweist, die aus einer Alkoxygruppe, einer Oximgruppe, einer Acyloxygruppe oder einer Acetoxygruppe ausgewählt ist.

9. Sensorsystem (100) zum Überwachen und/oder Erkennen der Kohlenwasserstofffluidleckage, umfassend mindestens ein Sensorelement (10, 11) nach einem der Ansprüche 1 bis 8, wobei jedes Sensorelement mit einer positiven Elektrode (4) und einer passiven Elektrode (83) verbunden ist, wobei die passive Elektrode (3) mit Masse verbunden ist;
wobei das Sensorsystem (100) ferner eine Datenerfassungsvorrichtung (5) umfasst, die mit der positiven Elektrode (4) jedes Sensorelements (10, 11) in Verbindung steht.

10. Sensorsystem (100) nach Anspruch 10, wobei die elektrisch leitfähige, ausgehärtete Zusammensetzung in den Sensorelementen (10, 11) eine Schicht ausbildet und wobei die Sensorelemente (10, 11) ein Sensorarray ausbilden, umfassend mindestens ein Sensorelement (10), das angeordnet ist, um die Kohlenwasserstofffluidleckage über eine Längsrichtung der Zusammensetzung zu überwachen und/oder zu erkennen, und mindestens ein Sensorelement (11), das angeordnet ist, um die Kohlenwasserstoffflüssigkeitsleckage über eine Querrichtung der elektrisch leitfähigen, ausgehärteten Zusammensetzung zu überwachen und/oder zu erkennen.

11. Sensorsystem (100) nach einem der Ansprüche 9 oder 10, umfassend Sensorelemente (10, 11), die auf verschiedene Arten von leckenden Kohlenwasserstofffluiden reagieren.

12. Sensorsystem (100) nach einem der Ansprüche 9 bis 11, ferner umfassend ein Substrat und wobei das mindestens eine Sensorelement (10, 11) auf dem Substrat angeordnet ist, wobei das Substrat konfiguriert ist, um auf mindestens einem Abschnitt einer Kohlenwasserstofftransportstruktur oder einer Kohlenwasserstoffspeicherstruktur installiert zu werden.

13. Sensorsystem (100) nach einem der Ansprüche 9 bis 12, wobei jedes Sensorelement (10, 11) konfiguriert ist, um einen eigenen Strombegrenzungswiderstand zu umfassen, um jedem Sensorelement (10, 11) eine eindeutige repräsentative Spannung bereitzustellen.

14. Verfahren zum Überwachen und/oder Erkennen von Kohlenwasserstoffleckagen unter Verwendung des Sensorelements (10, 11) nach einem der Ansprüche 1 bis 8.

## Revendications

1. Élément de détection (10, 11) permettant de surveiller et/ou détecter une fuite de fluide d'hydrocarbure, l'élément de détection comprenant une composition durcie électriquement conductrice comprenant
(a) au moins un polyorganosiloxane ayant au moins un groupe terminal de la formule (I)
-Si(R¹)ₖ(Y)₃₋ₖ (1),
où
chaque R¹ est indépendamment choisi parmi un radical d'hydrocarbure contenant de 1 à 20 atomes de C ;
chaque Y est indépendamment choisi parmi un groupe hydroxy ou un groupe hydrolysable ; et
k vaut 0, 1, ou 2 ;
(b) au moins une nanostructure de carbone électriquement conductrice (1) dans une proportion de 0,01 à 10 % en poids sur la base du poids total de la composition ;
(c) au moins un catalyseur de durcissement ; et
(d) éventuellement, au moins un agent de réticulation.

2. Élément de détection (10, 11) selon la revendication 1, dans lequel l'au moins un polyorganosiloxane (a) est un polydiorganosiloxane, de préférence un polydiméthylsiloxane et/ou le polyorganosiloxane a au moins deux groupes terminaux de la formule (I).

3. Élément de détection (10, 11) selon l'une quelconque des revendications 1 ou 2,
où
chaque R¹ est indépendamment choisi dans le groupe constitué d'un groupe alkyle contenant de 1 à 20 atomes de C, d'un groupe aryle contenant de 6 à 20 atomes de C et d'un groupe aralkyle contenant de 7 à 20 atomes de C, de préférence choisi dans le groupe alkyle contenant de 1 à 20 atomes de C, plus préférablement de 1 à 8 atomes de C ; et/ou
chaque Y est indépendamment choisi parmi un groupe hydrolysable, un groupe oxime, un groupe alkoxy, un groupe acyloxy ou un groupe acétoxy, de préférence un groupe alkoxy.

4. Élément de détection (10, 11) selon l'une quelconque des revendications 1 à 3, dans lequel la nanostructure de carbone électriquement conductrice (b) est choisie dans le groupe constitué de :
nanostructures de carbone ou de fragments de nanostructures de carbone comportant une pluralité de nanotubes de carbone à parois multiples qui sont réticulés dans une structure polymère en étant ramifiés, interdigités, enchevêtrés et/ou partageant des parois communes ;
nanotubes de carbone fracturés, dérivés des nanostructures de carbone, ramifiés et partageant des parois communes entre eux ;
brins de nanofeuillet carboné allongés dérivés des nanostructures de carbone et comportant des nanofeuillets carbonés qui ont été déplacés linéairement les uns par rapport aux autres ;
nanofeuillets carbonés dispersés comprenant des nanofeuillets carbonés exfoliés et fracturés qui ne partagent pas de parois communes entre eux ; et
leurs combinaisons.

5. Élément de détection (10, 11) selon l'une quelconque des revendications 1 à 4, dans lequel la composition comprend la nanostructure de carbone électriquement conductrice (b) dans une proportion de 0,05 à 1 % en poids, de préférence de 0,05 à 0,5 % en poids, sur la base du poids total de la composition.

6. Élément de détection (10, 11) selon l'une quelconque des revendications 1 à 6, la composition comprend en outre au moins une charge électroconductrice supplémentaire, qui est différente de la nanostructure de carbone (b), jusqu'à 9 % en poids, de préférence de 0,1 à 7 % en poids, plus préférablement de 0,1 à 3 % en poids, sur la base du poids total de la composition, à condition que la somme de la nanostructure de carbone électroconductrice (b) et de la charge électroconductrice supplémentaire soit inférieure à 10 % en poids, de préférence inférieure à 9 % en poids, plus préférablement inférieure à 5 % en poids, en particulier inférieure à 4 % en poids.

7. Élément de détection (10, 11) selon l'une quelconque des revendications 1 à 6, dans lequel l'agent de réticulation (e) est choisi parmi un composé de silane ayant la formule générale Si(R²)ₘ(X)₄₋ₘ, où
chaque R¹ est choisi indépendamment parmi un groupe d'hydrocarbure aliphatique ou aromatique contenant 1 à 20 atomes de C, un groupe vinyle ou un atome d'hydrogène ;
chaque X est indépendamment choisi parmi un groupe hydroxyle ou un groupe hydrolysable, de préférence choisi parmi un groupe oxime, un groupe alkoxy, un groupe acyloxy ou un groupe acétoxy ; et
m vaut 0, 1, 2 ou 3, de préférence 1 ;

8. Élément de détection (10, 11) selon l'une quelconque des revendications 1 à 7,
dans lequel :
le polyorganosiloxane (a) a au moins un groupe terminal alkoxysilane, de préférence un groupe terminal méthyldiméthoxysilane, et l'agent de réticulation (e) est un composé silane ayant au moins un groupe hydrolysable X choisi parmi un groupe alkoxy, de préférence un groupe méthoxy ou éthoxy, plus préférablement un groupe méthoxy ; soit
le polyorganosiloxane (a) est un polyorganosiloxane à terminaison hydroxyle, de préférence α, polydiorganosiloxane à terminaisonω-dihydroxyl, plus préférablement α, polydimethylsiloxane à terminasonω-hydroxyl, et l'agent de réticulation (e) est un composé silane ayant au moins un parmi un groupe hydrolysable X choisi parmi un groupe alkoxy, un groupe oxime, un groupe acyloxy, ou un groupe acetoxy.

9. Système de détection (100) permettant de surveiller et/ou détecter une fuite de fluide d'hydrocarbure comprenant au moins un élément de détection (10, 11) selon l'une quelconque des revendications 1 à 8, dans lequel chaque élément de détection est connecté à une électrode positive (4) et à une électrode passive (83), l'électrode passive (3) étant connectée à la terre ;
dans lequel le système de détection (100) comprend en outre un dispositif d'acquisition de données (5) en communication avec l'électrode positive (4) de chaque élément de détection (10, 11).

10. Système de détection (100) selon la revendication 10, dans lequel la composition durcie électriquement conductrice dans les éléments de détection (10, 11) forme une couche et dans lequel les éléments de détection (10, 11) forment un réseau de capteurs comprenant au moins un élément de détection (10) configuré pour surveiller et/ou détecter une fuite de fluide d'hydrocarbure dans une direction longitudinale de la composition et au moins un élément de détection (11) configuré pour surveiller et/ou détecter une fuite de fluide d'hydrocarbure dans une direction transversale de la composition durcie électriquement conductrice.

11. Système de détection (100) selon l'une quelconque des revendications 9 ou 10, comprenant des éléments de détection (10, 11) sensibles à différents types de fuites de fluides d'hydrocarbure.

12. Système de détection (100) selon l'une quelconque des revendications 9 à 11, comprenant en outre un substrat et dans lequel l'au moins un élément de détection (10, 11) est disposé sur le substrat, le substrat étant conçu pour être installé sur au moins une partie d'une structure de transport d'hydrocarbure ou d'une structure de stockage d'hydrocarbure.

13. Système de détection (100) selon l'une quelconque des revendications 9 à 12, dans lequel chaque élément de détection (10, 11) est configuré pour comprendre une résistance distinctive limitant le courant afin de fournir une tension représentative unique à chaque élément de détection (10, 11).

14. Procédé de surveillance et/ou de détection d'une fuite d'hydrocarbure à l'aide de l'élément de détection (10, 11) selon l'une quelconque des revendications 1 à 8.
